# EUROPEAN PATENT SPECIFICATION

(11) **EP 2 783 924 B1**
(45) Date of publication and mention of the grant of the patent: **31.08.2016**
(21) Application number: 13160841.6
(22) Date of filing: 25.03.2013
(51) Int. Cl.: B60R 21/36, B60R 21/233, B60R 21/231

(54) **An airbag arrangement**
Airbaganordnung
Agencement d'airbag

(43) Date of publication of application: 01.10.2014
(73) Proprietor: Autoliv Development AB, 447 83 Vårgårda (SE)
(72) Inventor: Magnusson, Ulf, SE-44157 Alingsås (SE)
(74) Representative: Parry, Simon James

(56) References cited:
- EP-A1- 1 698 526
- JP-A- S5 090 030
- US-A- 3 762 741
- US-A1- 2011 001 307
- US-B2- 7 712 770

## Description

The present invention relates to an airbag arrangement, and more particularly relates to an airbag arrangement on a motor vehicle arranged to provide protection to an occupant of the vehicle or to a pedestrian.

Inflatable airbags are very well known for use as safety devices inside the cabins of motor vehicles to provide protection to occupants of the vehicle, and more recently have become increasingly common for use as safety devices on the exterior of vehicles to provide protection to pedestrians in the event of an impact. It is also known that in order to provide effective protection to a vehicle occupant or a pedestrian, an airbag should be configured to undergo a controlled collapse after inflation and upon impact by the occupant or pedestrian in order to absorb sufficient energy to provide effective protection to optimise the head impact for real life purpose with a pedestrian.

One commonly used way to ensure proper controlled collapse of an inflatable airbag is to provide the airbag with one or more vent apertures which are arranged to open, or be actively opened, as the inflated airbag is impacted by the occupant or pedestrian. However, it has been found that for large volume airbags such as those commonly proposed for deployment over the hood/bonnet and/or windscreen of a motor vehicle, and which thus take a relatively long time to inflate upon deployment, proper ventilation in this manner is difficult to achieve. There is thus a perceived advantage in providing an airbag which is large in overall size, but which has a relatively small inflatable volume, and which also does not require ventilation in order to provide sufficient energy absorption when struck by an occupant or a pedestrian.

It is a preferred object of the present invention to provide an improved airbag arrangement. United States Patent 3,762,741 provides an occupant restraint cushion including radially spaced inner and outer cylindrical walls, that corresponds to the preamble of claim 1.

European Patent Application EP 1,698,526 A1 provides an airbag including one first bag disposed on an object side, and two second bags 2 disposed on a person side. The bags communicate with each other through communicating openings.

According to the present invention, there is provided an airbag arrangement on a motor vehicle arranged to provide protection to an occupant of the vehicle or to a pedestrian, the arrangement including: an inflatable airbag and an inflator, the inflator being configured to generate a volume of inflating gas upon actuation, and the airbag defining an inflatable volume provided in fluid communication with the inflator for the receipt of said inflating gas, wherein the airbag is arranged to deploy upon inflation into a tubular configuration having a peripheral inflatable wall which at least partially defines said inflatable volume and which circumscribes a non-inflatable cavity, the inflatable wall being presented for impact by an occupant or pedestrian from outside the cavity, wherein the airbag further comprises at least one tether extending across the cavity and which is configured to impact a degree of ovality to the cross-sectional shape of the tubular airbag upon inflation.

Preferably, the peripheral inflatable wall has an inner surface which defines the cavity and an oppositely directed outer surface presented for impact with the occupant or pedestrian.

Advantageously, the tubular inflated configuration of the airbag is elongate.

Conveniently, the airbag is provided in the form of a pedestrian airbag arranged for deployment over a region the vehicle's exterior into a position in which a longitudinal axis of the airbag lies substantially parallel to a transverse axis of the vehicle.

Preferably, the tubular airbag has a length which is substantially equal to or greater than the transverse width of said region of the vehicle.

Alternatively, the airbag is provided in the form of a driver or passenger airbag arranged for deployment inside a cabin of the vehicle into a position in which a longitudinal axis of the airbag lies substantially parallel to a transverse axis of the vehicle.

Advantageously, the or each said tether is arranged to extend substantially orthogonal to a longitudinal axis of the tubular airbag.

Conveniently, the airbag has a plurality of said tethers arranged in spaced relation to one another along the length of the airbag.

Preferably, the or each said tether is arranged to extend substantially parallel to a longitudinal axis of the tubular airbag.

Advantageously, the or at least one said tether is inflatable, and is provided in fluid communication with the inflatable wall of the airbag.

Conveniently, the or each tether is connected to the inner surface of the inflatable wall.

Preferably, the inflatable wall of the airbag is configured for inflation around substantially its entire peripheral extent so as to have an inflated thickness around the entire periphery of the cavity.

Advantageously, the inflatable wall defines an inflatable volume which is continuous around the entire periphery of the cavity and which is thus inflatable by multi-directional flows of gas around the cavity from the inflator.

Alternatively, the peripheral wall defines an inflatable volume having a discontinuity at a position around the periphery of the cavity, and which is thus inflatable by a uni-directional flow of gas around the cavity from the inflator.

So that the invention may be more readily understood, and so that further features thereof may be appreciated, embodiments of the invention will now be described by way of example with reference to the accompanying drawings in which:
Figure 1 is plan view of a first sheet of flexible material which is used in the construction of an airbag forming part of an embodiment of the present invention;
Figure 2 is a plan view of a second sheet of flexible material which is used in the construction of the airbag;
Figure 3 shows a tether sheet of flexible material which is used to form one of a plurality of tethers in the airbag;
Figure 4 is a schematic perspective view showing the first sheet of figure 1 in a rolled configuration during construction of the airbag;
Figure 5 is a perspective view showing the second sheet of figure 2 in a similar rolled configuration;
Figure 6 is a view corresponding generally to that of figure 5, showing a of plurality tether sheets of the type shown in figure 3 positioned within the rolled up second sheet;
Figure 7 is a schematic perspective view showing the airbag in a fully constructed configuration, together with an inflator;
Figure 8 is a transverse cross-sectional view taken along line VIII-VIII of the airbag shown in figure 7;
Figure 9 is a schematic perspective view showing the airbag in a deployed configuration across the windscreen of a motor vehicle, in order to provide protection to pedestrians;
Figure 10 is a cross-sectional view taken along line X-X in figure 9;
Figure 11 is a transverse cross-sectional view through an airbag in accordance with another embodiment;
Figure 12 is a schematic perspective view similar to that of figure 7, but which shows an airbag in accordance with another embodiment;
Figure 13 is a transverse cross-sectional view through the airbag of figure 12;
Figure 14 is a longitudinal cross-sectional view showing an alternative construction of the airbag in accordance with another embodiment;
Figure 15 is a transverse cross-sectional view taken along line XV-XV of figure 14;
Figure 16 is a plan view of a first sheet of fabric used in the construction of an alternative configuration of airbag forming part of another embodiment;
Figure 17 is a plan view of a second sheet of fabric used in the construction of the alternative configuration of airbag;
Figure 18 is a schematic perspective view showing a stage in the construction of the alternative configuration airbag;
Figure 19 is a transverse cross-sectional view through the alternative configuration of the airbag; and
Figure 20 is a schematic perspective view showing another alternative airbag which may form part of the present invention.

The invention will be described below with reference to a particular method of forming an airbag. However, whilst this is illustrative of the construction of the airbag, it should be appreciated that alternative methods may be used to create the airbags described below, or indeed others falling within the scope of the present invention.

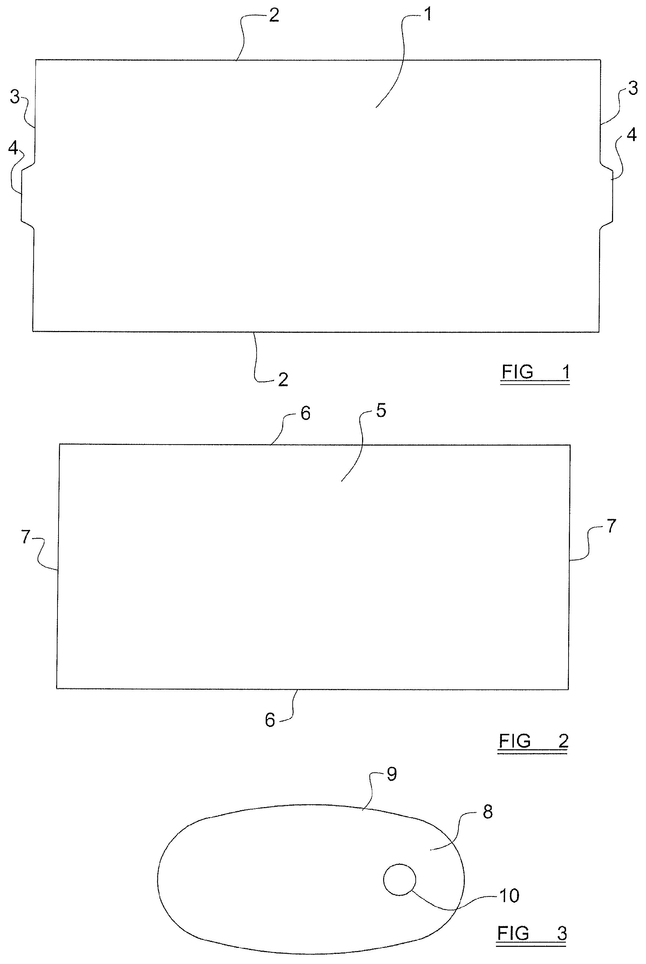

Turning now to consider the drawings in more detail, figure 1 shows a first sheet 1 of flexible material. The sheet is preferably a sheet of woven fabric material of a type commonly used for the production of airbags. However, it is to be appreciated that the present invention is not limited to the use of fabric and other flexible sheet material could be used for the first sheet (also the various other sheets which will be described below) such, for example, thin plastic film or thin metallic foil. The present invention will be described below with particular reference to the use of fabric.

The first sheet 1 is generally rectangular in shape, having a pair of parallel long sides 2, and a pair of parallel short sides 3. A tab 4 extends outwardly from a central region of each short side 3, the two tabs being generally identical in form and formed as an integral part of the rest of the sheet 1.

Figure 2 shows a second sheet 5 which is formed from the same flexible material as the first sheet 1, and which is also generally rectangular in form having a pair of parallel long sides 6 and a pair of parallel short sides 7. The second sheet 5 does not have tabs like the first sheet 1. The second sheet 5 is approximately the same width as the first sheet 1, but is slightly shorter than the first sheet 1.

Figure 3 shows a smaller sheet 8 of the same flexible material, which can be considered to represent a tether sheet due its function in forming a tether as will be described below. The tether sheet 8 is shown to have a generally ovoid shape defined by a peripheral edge 9, although it is to be appreciated that in other embodiments the tether sheet may have a different shape such as, for example a circle or a shape at least approximating to a circle. The tether sheet 8 is shown in figure 3 to include an optional aperture 10.

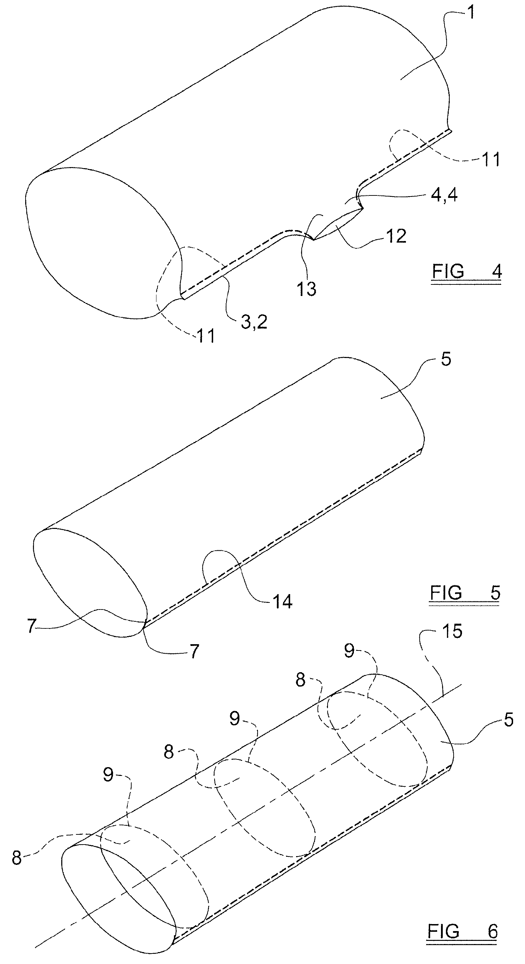

Turning now to consider figure 4, the first sheet 1 is shown in a rolled configuration in which its two short sides 3, 3, and their respective tabs 4, are aligned and superimposed, such that the sheet adopts a cylindrical configuration. The short sides 3, 3 are connected to one another via a pair of seams 11, each of which extends from a respective end of the cylinder to the aligned and superimposed tabs 4. As will thus be noted, the tabs 4, 4 are thus unconnected along their outermost edges such than an inlet aperture 12 is formed between them. The tabs themselves cooperate to define an inlet neck 13 to the airbag.

Figure 5 shows the second sheet 5 also rolled so as to form another cylinder. However, it is to be noted that rather than being aligned and superimposed as in the case of the first sheet 1, the short edges 7 of the second sheet are overlapped such that the adjacent regions of the sheet become superimposed. The overlapped regions of the two ends of the sheet 5 are connected via a seam, which again is preferably stitched.

As will be appreciated, because the second sheet 5 is slightly shorter than the first sheet 1, its cylindrical configuration as shown in figure 5 has a smaller diameter than the cylindrical configuration of the first sheet 1 shown in figure 4.

Figure 6 shows the cylindrical configuration of the second, shorter, sheet 5 with three tether sheets 8 located inside its cylindrical cavity. The tether sheets 8 are arranged in spaced relation to one another along the longitudinal axis 15 of the cylindrically rolled second sheet 5, with each arranged to extend across the cylindrical cavity inside, generally orthogonal to the longitudinal axis 15.

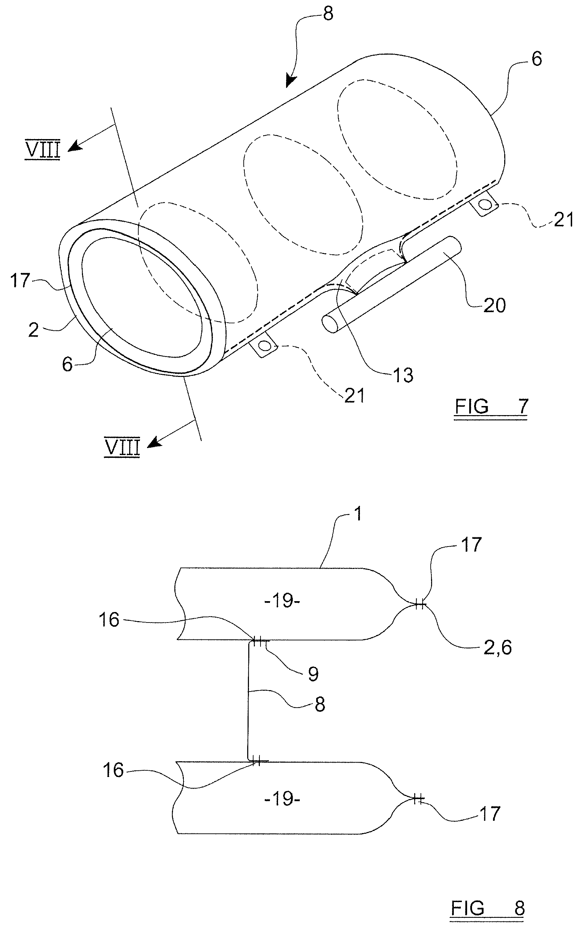

The tether sheets 8 are each affixed to the second sheet 5 around their peripheral edges 9, for example via respective peripheral stitched seams. As shown most clearly in figure 8, the edge regions of the tether sheets 8 are folded over to make contact with the inside of the second sheet 5 and are connected thereto by stitched seams 16. As will be appreciated, because the tether sheets 8 each have a generally identical ovoid shape, they will impart a degree of ovality to the cross-sectional shape of the rolled second sheet 5.

The cylindrically configured second sheet 5 is then inserted axially inside the cylindrically configured first sheet 1, as illustrated in figure 7, and the adjacent (and now peripheral) long edges of the two sheets 2, 6 at each end are then interconnected by end seams 17. A tubular airbag 18 is thus created which has an inflatable volume 19 defined by the radial space between the two interconnected sheets 1, 5. As will be appreciated, in the configuration illustrated in figure 7, the inflatable volume 18 has a generally annular configuration in transverse cross-section across the airbag and which extends the full length of the airbag.

The neck 13 and inlet opening 12 defined by the two tabs 4 serves as an inlet to the inflatable volume 19 for inflating gas, and in indeed figure 7 shows an inflator 20 such as a conventional gas generator fluidly connected to the neck 13 via the inlet opening for the supply of inflating gas to the inflatable volume 19 of the airbag 18 via the inlet neck 13.

Figure 7 also shows a pair of optional mounting tabs 21 which can be fixed to, or implicated within, the seams 11 which serve to interconnect the short end edges 3, 3 of the first sheet 1. It is to be appreciated, however, that the tabs 21 could alternatively be formed as integral protrusions from the short edges 3, 3 of the first sheet 21. As will be evident to those of skill in the art of motor vehicle airbags, the mounting tabs 21 allow for secure connection of the end regions of the airbag 18 to the structure of a motor vehicle.

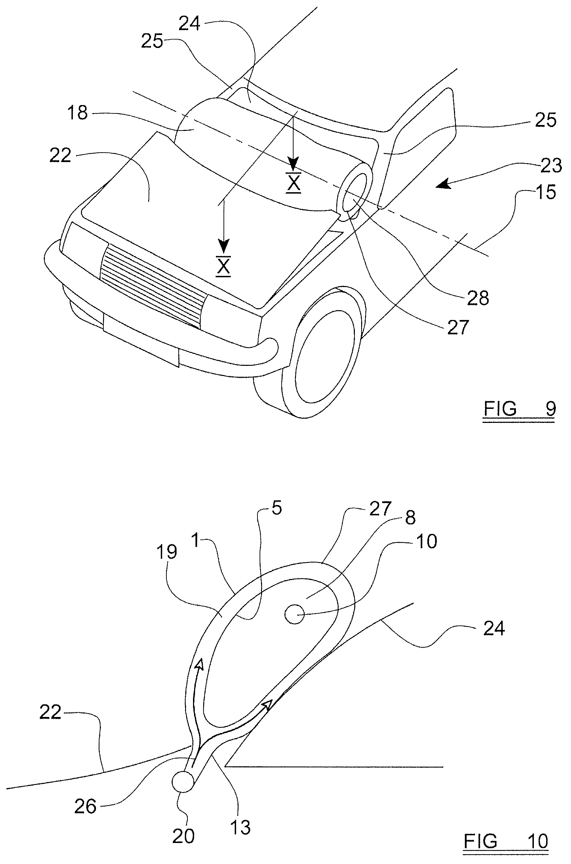

Although it is envisaged that an airbag having a similar configuration to that proposed above could be used as a so-called driver's airbag, or a passenger airbag, or even as an inflatable curtain to deploy across the side windows of a motor vehicle in the event of a side impact or roll over situation, the airbag is perceived to offer particular benefits when used as a pedestrian airbag and as such when configured to deploy over or across part of the windscreen and/or hood/bonnet of a motor vehicle. Figures 9 and 10 illustrate an airbag of the type described above used for such a pedestrian-protection purpose.

The airbag 18 is initially provided in a tightly packed package (not shown) under a rear part of the hood or bonnet 22 of a motor vehicle 23, at a position immediately in front of the vehicle's windscreen 24. More particularly, the airbag 18 will be fluidly connected, via its neck 13 and associated inlet aperture 12, to the inflator 20 which in turn will be mounted beneath the rear part of the hood or bonnet 22.

Figures 9 and 10 illustrate a motor vehicle 23 fitted with a pedestrian airbag 18 of the type described above, and show the airbag 18 in an inflated condition following actuation of the inflator 20. The rear of the hood or bonnet 22 is lifted, for example by another air-bag, a piston or other lifting arrangement, to allow sufficient space for the pedestrian airbag 18 to inflate so that it deploys in a manner effective to cover at least part of the windscreen 24 and the adjacent A-pillars 25 of the vehicle, thereby cushioning the impact of a pedestrian with these parts of the vehicle.

More particularly, having regard to figure 10, it will be noted that upon initial actuation of the inflator 20, a large volume of inflating gas is directed at high speed though the neck 13 and into the inflatable volume 19 defined between the two sheets 1, 5 of the airbag. As illustrated schematically by the bifurcated arrow 26 in figure 10, the flow of inflating gas into and around the inflatable volume 19 can be multi-directional due to the continuous annular nature of the inflatable volume 19. Gas is shown flowing both around the bottom part and over the top part of the inflatable volume 19.

As shown most clearly in figure 9, the airbag is inflated into a deployed configuration in which it covers at least part of the vehicle's windscreen 24, and in which it is notably tubular. The inflatable volume 19 of the airbag thus effectively defines a peripheral inflatable wall 27 which circumscribes a non-inflatable cavity 28 inside the resulting tubular configuration. The cavity 28 is defined by the second sheet 5 which of course forms the inner surface of the inflatable wall 27. As will be appreciated, the cavity 28 is non-inflatable in the sense that it is fluidly isolated from the inflator 20.

Having particular regard to figure 10, the tether sheets 8 each serve as tethers extending across the cavity 28 of the tubular airbag in order to control the cross-sectional shape of the airbag upon inflation. The shape of the tether sheets 8 is thus important in this function as it will define the shape of the cavity 28 at predetermined positions along the axial length of the airbag, effectively preventing the aggressive inflow of inflating gas from distorting the cross-sectional shape of the tubular airbag significantly from the profile illustrated schematically in figure 10. The optional apertures 10 formed in the tethers ensure the free flow of air from atmosphere and generally axially along the cavity 28 as the airbag inflates, thereby preventing the creation of any low-pressure regions inside the cavity which could impede the proper deployment of the airbag.

The airbag 18 is most preferably arranged for deployment across the windscreen 24 of the vehicle 23 into a position as shown in figure 9 in which its longitudinal axis 15 is substantially parallel to the transverse axis of the vehicle. Also, it should be appreciated that the longitudinal length of the elongate tubular airbag 18 is preferably substantially equal to, or even greater than, the width of the underlying region of the vehicle (in this case the windscreen and A-Pillar region).

When the airbag 18 is deployed and inflated into its tubular configuration as illustrated in figures 9 and 10 the outer surface of its inflatable wall 27, as defined by the first sheet 1, is presented for impact by a pedestrian who might be struck by the vehicle, from outside the cavity. As will be appreciated, because the airbag is arranged to adopt a tubular configuration with an inflatable wall when it is deployed, it presents a large cushion for impact with a pedestrian, whilst only requiring a relatively small volume of inflating gas to reach full deployment. Furthermore, the cavity which is defined inside the peripheral wall serves to improve the energy absorption of the airbag considerably compared to airbags which do not have a non-inflatable cavity.

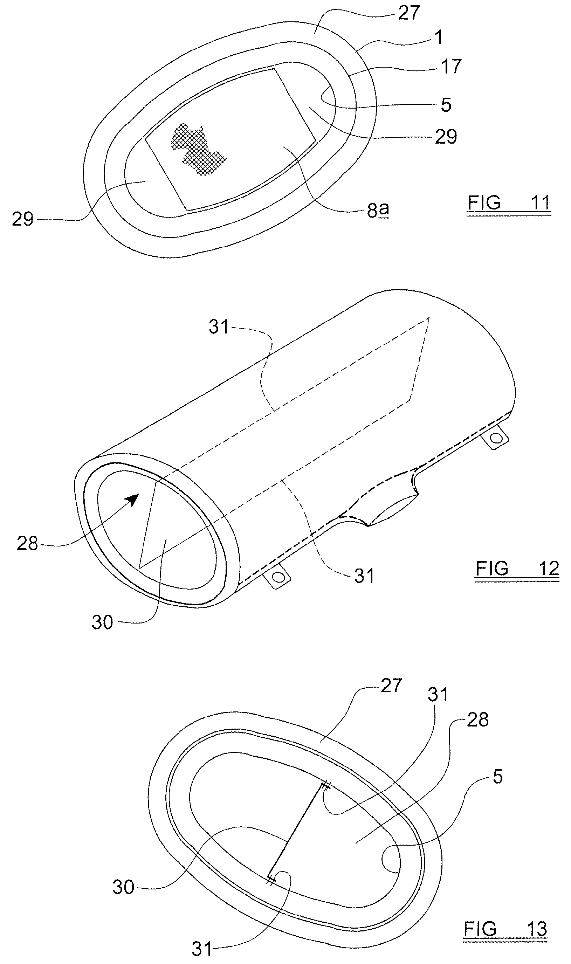

Figure 11 is a transverse cross-sectional view of a variant of the airbag configuration described above, which is identical in all respects except for the tether sheets 8. In this arrangement it will be noted that the tether sheets 8a are not connected to the second sheet 5 defining the inner surface of the inflatable wall 27 around their entire periphery. Instead, it will be noted that the tether sheets 8a are somewhat shorter than those previously described, and also are generally rectangular in form. The rectangular tether sheets 8a of this arrangement are connected to the second sheet 5 along their long side edges, leaving their short end edges unconnected to the second sheet. As illustrated, this configuration of tether 8a can be sufficient to impart a similar transverse cross-sectional shape to the inflated tubular airbag, because the regions of the inflatable wall 27 passing around the unconnected ends of the tether sheets 8a have a natural tendency to adopt a curved profile anyway. It will also be noted that the resulting gaps 29 between the ends of the tether sheets 8a and the inflatable wall 27 obviate the need for apertures in the tether sheets 8a themselves, by permitting the free flow of air axially along the cavity of the tubular airbag.

Figures 12 and 13 show another alternative form of the airbag 18, in which the plurality of tether sheets 8, or 8a extending transversely across the cavity are replaced by single tether sheet 30 extending longitudinally and generally parallel to the longitudinal axis of the tubular airbag. The tether sheet 30 in this configuration has an elongate rectangular configuration and is connected to the second sheet 5 defining the inner surface of the inflatable wall 27 along its long side edges 31. It has been found that this type of configuration is still sufficient to control the cross-sectional shape of the tubular airbag as it reaches full inflation, by tethering opposite sides of the inflatable wall to one another, thereby ensuring sufficient "spread" of the airbag across the windscreen of the vehicle.

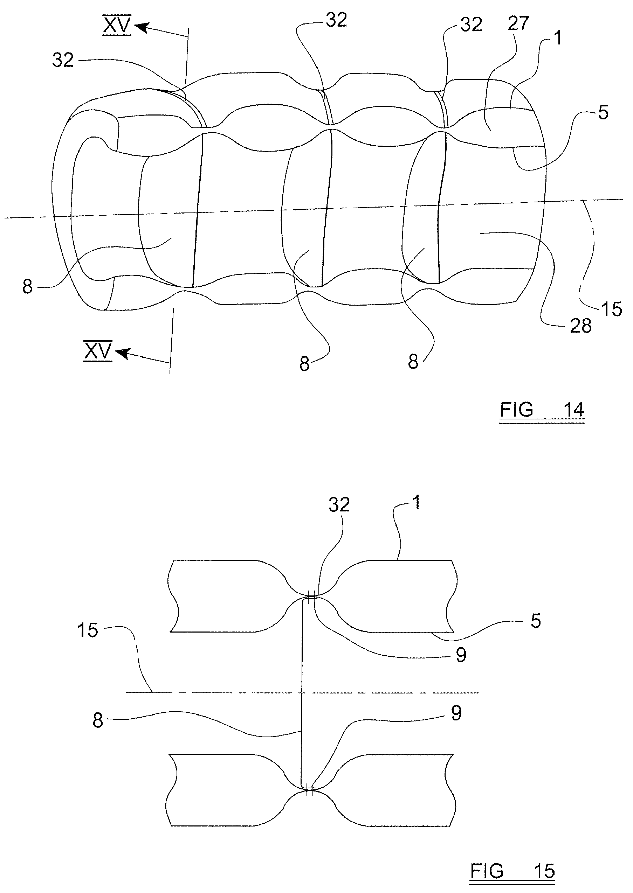

Figures 14 and 15 show another alternative form of airbag which retains the plurality of transversely extending and longitudinally spaced apart tether sheets 8, but in which regions of the inflatable wall 27 are narrowed by interconnecting the first and second sheets 1, 5 across the wall 27. More particularly, it will be noted that at spaced apart positions along the axial length of the airbag the two sheets 1, 5 are interconnected by circumferential seams 32. The circumferential seams 32 can be formed as simple stitched seams, or alternatively can be formed by adhesively securing the sheets 1, 5 together, or even by the application of heat to fuse the material of the sheets 1, 5 together. It is also proposed that in some arrangements of this general type, the sheets 1, 5 could be simultaneously woven, with the seams 32 being formed as an integral part of the weave of the sheets via a so-called "one-piece weaving" technique of a type known per se. It is envisaged that each seam 32 may have one or more gaps to permit the axial flow of inflating gas.

As illustrated most clearly in figure 15, the transversely extending tether sheets 8 are connected to the seams 32 around their peripheral edges 9, and indeed the peripheral edges of the tether sheets 8 may be implicated in respective seams 32.

It is to be noted that the tether sheets 8 may be angled with respect to the longitudinal axis 15 of the airbag, rather than orthogonal as illustrated. Also, the seams 32 may be configured so as to extend around the cavity 28 in a helical configuration in order to avoid there being a non-inflated region of the wall extending all the way around the cavity at the same longitudinal position.

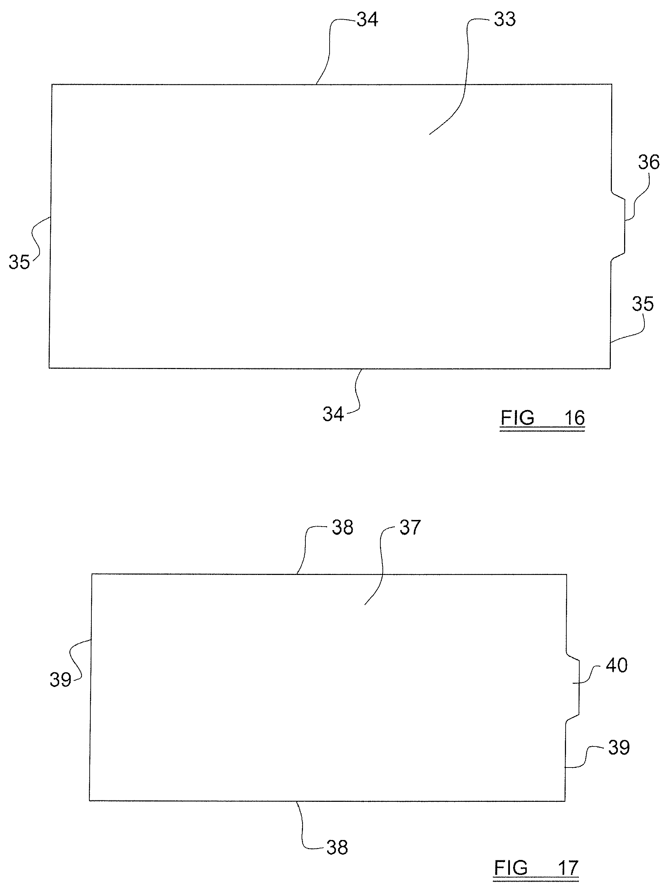

Turning now to consider figures 16 to 19, an alternative configuration of airbag forming part of an embodiment of the present invention will be described below with reference to a particular method of forming the airbag. However, whilst this is illustrative of the construction of the airbag, it should be appreciated that alternative methods may be used to create the airbag.

Figure 16 shows a first sheet 33 of flexible material. The sheet is again preferably a sheet of woven fabric material of a type commonly used for the production of airbags, although alternative materials of the type mentioned above could be used instead. The first sheet 33 is generally rectangular in shape, having a pair of parallel long sides 34, and a pair of parallel short sides 35. A tab 36 extends outwardly from a central region of one of the short sides 35, the tab being formed as an integral part of the rest of the sheet 33.

Figure 17 shows a second sheet 37 which is formed from the same flexible material as the first sheet 1, and which is also generally rectangular in form having a pair of parallel long sides 38 and a pair of parallel short sides 39. The second sheet 37 in this embodiment also has a tab 40 formed as an integral part of the sheet and which extends outwardly from a central region of one of the short sides 39. The tab 40 of the second sheet 37 is identical to the tab 36 of the first sheet 33. The second sheet 37 is approximately the same width as the first sheet 33, but is slightly shorter than the first sheet 33.

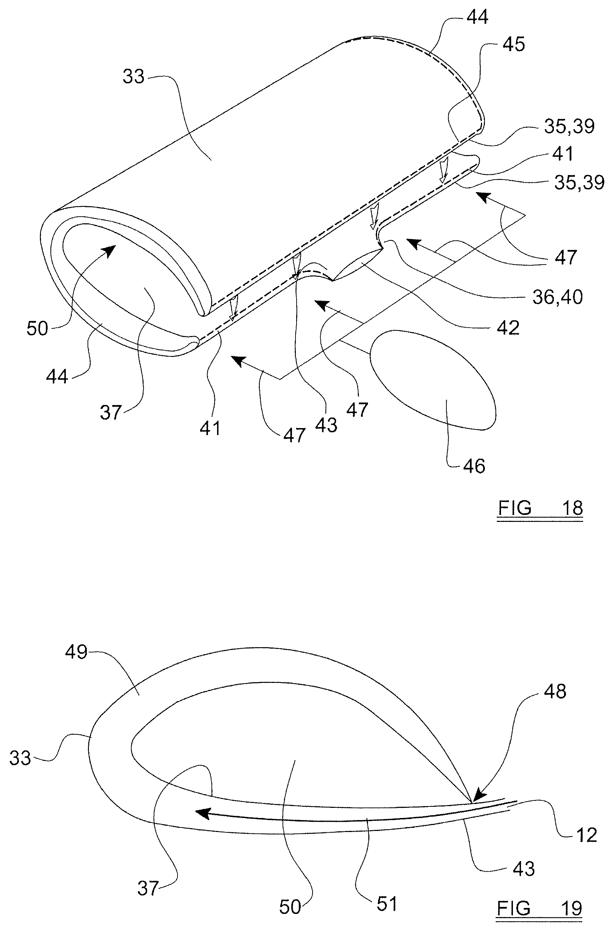

Having regard to figure 18, the first and second sheets 33, 37 are initially superimposed and their short sides 35, 39 with tabs 36, 40 are aligned and interconnected by a pair of seams 41, each of which extends from a respective side edge to the aligned and superimposed tabs 36, 40. As will thus be noted, the tabs 36, 40 are thus unconnected along their outermost edges such than an inlet aperture 42 is formed between them. The tabs themselves cooperate to define an inlet neck 43 to the airbag.

The long side edges 34, 38 of the two sheets 33, 37 are then interconnected by seams 44, and the other short end edges 35, 39 (i.e. those without tabs) are also aligned and interconnected by a seam 45. In this configuration, because the second sheet 37 is slightly shorter than the first sheet 33, a degree of curvature is imparted to the resulting pair of interconnected sheets.

Figure 18 shows the curvature somewhat exaggerated from its natural condition, and in particular shows the interconnected pairs of side edges 35, 39 at each end of the sheets being brought together so as to define an elongate bag having a U-shaped transverse cross-section. As this is done, tether sheets 46 (generally identical to the tether sheets 8 of the previously described embodiment) are inserted into the resulting U-shaped space as denoted by arrows 47, and are connected to the second sheet 37 around their peripheral edges in substantially the same manner as in the previously described embodiment. When the tether sheets 46 are all connected to the second sheet in this manner, the two pairs of interconnected side edges 35, 39 are then interconnected themselves by creation of a further seam 48 as shown most clearly in figure 19, in order to form an airbag having a tubular configuration and inflatable peripheral wall 49 circumscribing a non-inflatable cavity 50, in a broadly similar manner to the previously described embodiment.

However, it will be noted from figure 19 in particular that in this arrangement the inflatable wall 49 which defines the inflatable volume of the airbag is configured for inflation only by a flow of inflating gas around the transverse shape of the tubular airbag in one direction (clockwise as illustrated), as denoted by arrow 51. In this respect the inflatable volume defined by the inflatable wall 49 can be considered to have a discontinuity at the seam 48 which interconnects the end edges 35, 39 of the sheets 33, 37, which means that the airbag is inflatable by a uni-directional flow of gas 51, around the cavity 50 from an inflator in fluid communication with the inlet 42 and neck 43.

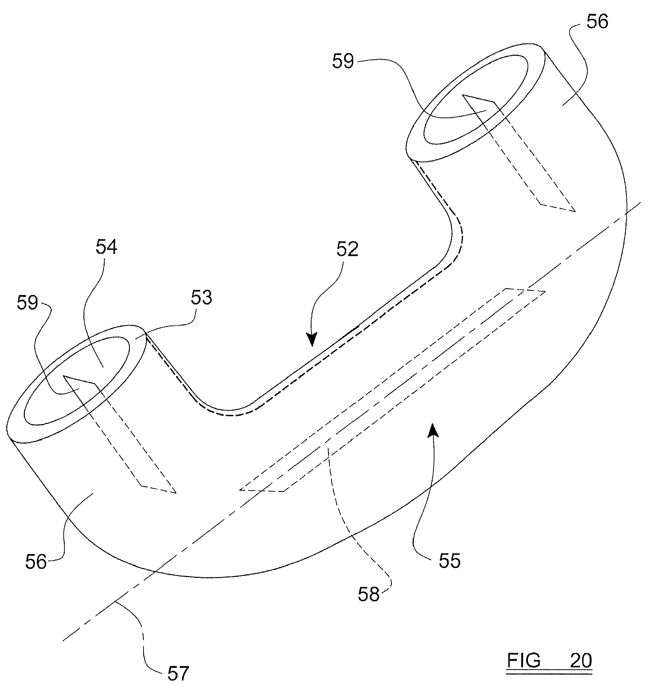

Figure 20 illustrates schematically an alternative shape of airbag, which can be constructed via either of the methods described above. As will be noted, the airbag is again generally elongate in form, having a peripheral inflatable wall 53 circumscribing a non-inflatable cavity 54. However, in this arrangement the airbag is also generally U-shaped, having a relatively long central linear section 55, and a pair of relatively short limbs 56 at each end thereof and extending generally orthogonal to the longitudinal axis 57 of the central section 55. The general principle of a U-shaped airbag of this sort of shape will be well-known to a person of sill in the field of pedestrian airbags in particular, such shapes having been proposed previously such that the short limbs 56 are provided to deploy over the rigid A-pillars at each side of a vehicle's windscreen.
It will be noted that the U-shaped airbag 52 shown in figure 20 as an elongate tether 58 extending across the non-inflatable cavity 43 and generally parallel to the longitudinal axis 57 of the central section, and also a pair of smaller tethers extending across the cavity 54 inside respective limbs 56 and orthogonally relative to the axis 57.

Whilst the invention has been described above with reference to particular configurations of airbags, and with particular reference to use in providing protection to pedestrians when struck by a motor vehicle, it is to be appreciated that various changes and modifications can be made without departing from the scope of the present invention. For example, it is envisaged that in any of the airbag arrangements proposed above, the various tethers extending across the non-inflatable cavities could themselves be inflatable rather than being provided in the forms of single layers of thin sheet material. In such arrangements it is envisaged that the inflatable tethers could be provided in fluid communication with the inflatable wall of the airbag, and as such contribute to the inflatable volume of the airbag, the tethers this receiving a secondary flow of inflating gas from the inflatable wall upon deployment of the airbag.

Also, it is envisaged that airbags constructed along the principles described above, and having the resulting technical features could alternatively be used, for example, as driver or passenger airbags, or even as so-called inflatable curtain airbags arranged to deploy inside the cabin of a motor vehicle.

When used in this specification and claims, the terms "comprises" and "comprising" and variations thereof mean that the specified features, steps or integers are included. The terms are not to be interpreted to exclude the presence of other features, steps or integers.

## Claims

1. An airbag arrangement on a motor vehicle (23) arranged to provide protection to an occupant of the vehicle or to a pedestrian, the arrangement including: an inflatable airbag (18) and an inflator (20), the inflator (20) being configured to generate a volume of inflating gas upon actuation, and the airbag (18) defining an inflatable volume (19) provided in fluid communication with the inflator (20) for the receipt of said inflating gas, wherein the airbag (18) is arranged to deploy upon inflation into a tubular configuration having a peripheral inflatable wall (27) which at least partially defines said inflatable volume (18) and which circumscribes a non-inflatable cavity (28), the inflatable wall (27) being presented for impact by an occupant or pedestrian from outside the cavity (28),
**characterised in that** the airbag (18) further comprises at least one tether (8) extending across the cavity (28) and which is configured to impart a degree of ovality to the cross-sectional shape of the tubular airbag (18) upon inflation.

2. An airbag arrangement according to claim 1, wherein the peripheral inflatable wall (27) has an inner surface (5) which defines the cavity (28) and an oppositely directed outer surface (1) presented for impact with the occupant or pedestrian.

3. An airbag arrangement according to claim 1 or claim 2, wherein the tubular inflated configuration of the airbag (18) is elongate.

4. An airbag arrangement according to claim 3, wherein the or each said tether (8) is arranged to extend substantially orthogonal to a longitudinal axis (15) of the tubular airbag (18).

5. An airbag arrangement according to claim 4, wherein the airbag (28) has a plurality of said tethers (8) arranged in spaced relation to one another along the length of the airbag.

6. An airbag arrangement according to claim 3, wherein the or each said tether (30) is arranged to extend substantially parallel to a longitudinal axis (15) of the tubular airbag.

7. An airbag arrangement according to any one of claims 1 to 6, wherein the or at least one said tether (8) is inflatable, and is provided in fluid communication with the inflatable wall (27) of the airbag.

8. An airbag arrangement according to any one of claims 2 to 7, wherein the or each tether (8) is connected to the inner surface (5) of the inflatable wall (27).

9. An airbag arrangement according to any preceding claim, wherein the inflatable wall (27) of the airbag is configured for inflation around substantially its entire peripheral extent so as to have an inflated thickness around the entire periphery of the cavity (28).

10. An airbag arrangement according to claim 9, wherein the inflatable wall (27) defines an inflatable volume (19) which is continuous around the entire periphery of the cavity (28) and which is thus inflatable by multi-directional flows (26) of gas around the cavity (28) from the inflator (20).

11. An airbag arrangement according to any one of claims 1 to 9, wherein the peripheral wall defines an inflatable volume having a discontinuity (48) at a position around the periphery of the cavity, and which is thus inflatable by a uni-directional flow of gas (51) around the cavity from the inflator.

12. A motor vehicle having an airbag arrangement according to claim 3, or any one of claims 4 to 11 as dependant on claim 3, wherein the airbag (18) is provided in the form of a pedestrian airbag arranged for deployment over a region the vehicle's exterior (24, 25) into a position in which the longitudinal axis (15) of the airbag lies substantially parallel to a transverse axis of the vehicle (23).

13. A motor vehicle according to claim 12, wherein the tubular airbag (18) has a length which is substantially equal to or greater than the transverse width of said region (24, 25) of the vehicle (23).

14. A motor vehicle having an airbag arrangement according to claim 3, or any one of claims 4 to 11 as dependant on claim 3, wherein the airbag (18) is provided in the form of a driver or passenger airbag arranged for deployment inside a cabin of the vehicle (23) into a position in which a longitudinal axis (15) of the airbag lies substantially parallel to a transverse axis of the vehicle.

## Patentansprüche

1. Airbaganordnung an einem Kraftfahrzeug (23), die so angeordnet ist, dass sie einen Insassen des Fahrzeugs oder einen Fußgänger schützt, wobei die Anordnung Folgendes aufweist: einen füllbaren Airbag (18) sowie einen Gasgenerator (20), wobei der Gasgenerator (20) so ausgelegt ist, dass er bei Betätigung ein Volumen Füllgas erzeugt, und der Airbag (18) ein füllbares Volumen (19) definiert, das zum Aufnehmen des Füllgases in Fluidverbindung mit dem Gasgenerator (20) angeordnet ist, wobei der Airbag (18) so angeordnet ist, dass er sich beim Füllen in eine röhrenförmige Gestalt mit einer füllbaren Umfangswand (27) entfaltet, die zumindest teilweise das füllbare Volumen (18) definiert und die einen nicht füllbaren Hohlraum (28) umschreibt, wobei die füllbare Wand (27) für einen Aufprall eines Insassen oder Fußgängers von außerhalb des Hohlraums (28) dargeboten wird,
**dadurch gekennzeichnet, dass** der Airbag (18) ferner mindestens eine Haltevorrichtung (8) umfasst, die über den Hohlraum (28) verläuft und so ausgelegt ist, dass sie die Querschnittsform des röhrenförmigen Airbags (18) beim Füllen mit einer gewissen Ovalität versieht.

2. Airbaganordnung nach Anspruch 1, wobei die füllbare Umfangswand (27) eine Innenfläche (5) aufweist, die den Hohlraum (28) definiert, und eine entgegengesetzt gerichtete Außenfläche (1), die für den Zusammenstoß mit dem Insassen oder Fußgänger dargeboten wird.

3. Airbaganordnung nach Anspruch 1 oder Anspruch 2, wobei die röhrenförmige gefüllte Gestalt des Airbags (18) länglich ist.

4. Airbaganordnung nach Anspruch 3, wobei die oder jede Haltevorrichtung (8) so angeordnet ist, dass sie im Wesentlichen orthogonal zu einer Längsachse (15) des röhrenförmigen Airbags (18) verläuft.

5. Airbaganordnung nach Anspruch 4, wobei der Airbag (28) eine Vielzahl der Haltevorrichtungen (8) aufweist, die in beabstandetem Verhältnis zueinander entlang der Länge des Airbags angeordnet sind.

6. Airbaganordnung nach Anspruch 3, wobei die oder jede Haltevorrichtung (30) so angeordnet ist, dass sie im Wesentlichen parallel zu einer Längsachse (15) des röhrenförmigen Airbags verläuft.

7. Airbaganordnung nach einem der Ansprüche 1 bis 6, wobei die oder die mindestens eine Haltevorrichtung (8) füllbar ist und in Fluidverbindung mit der füllbaren Wand (27) des Airbags angeordnet ist.

8. Airbaganordnung nach einem der Ansprüche 2 bis 7, wobei die oder jede Haltevorrichtung (8) mit der Innenfläche (5) der füllbaren Wand (27) verbunden ist.

9. Airbaganordnung nach einem vorhergehenden Anspruch, wobei die füllbare Wand (27) des Airbags zum Füllen um im Wesentlichen ihre gesamte Umfangsausdehnung ausgelegt ist, damit sie um den Gesamtumfang des Hohlraums (28) herum eine gefüllte Dicke aufweist.

10. Airbaganordnung nach Anspruch 9, wobei die füllbare Wand (27) ein füllbares Volumen (19) definiert, das um den Gesamtumfang des Hohlraums (28) herum durchgängig ist und das daher mit in mehreren Richtungen um den Hohlraum (28) herumströmenden Gasen (26) aus dem Gasgenerator (20) befüllbar ist.

11. Airbaganordnung nach einem der Ansprüche 1 bis 9, wobei die Umfangswand ein füllbares Volumen mit einer Unterbrechung (48) an einer Stelle um den Umfang des Hohlraums herum definiert, das daher mit einer um den Hohlraum herum einseitig gerichteten Gasströmung (51) aus dem Gasgenerator befüllbar ist.

12. Kraftfahrzeug mit einer Airbaganordnung nach Anspruch 3 oder nach einem der Ansprüche 4 bis 11, wenn abhängig von Anspruch 3, wobei der Airbag (18) in Form eines Fußgängerairbags vorgesehen ist, der so angeordnet ist, dass er sich über einem Fahrzeugaußenbereich (24, 25) in eine Position hinein entfaltet, in der die Längsachse (15) des Airbags im Wesentlichen parallel zu einer Querachse des Fahrzeugs (23) liegt.

13. Kraftfahrzeug nach Anspruch 12, wobei der röhrenförmige Airbag (18) eine Länge aufweist, die im Wesentlichen größer gleich der Breite des Bereichs (24, 25) des Fahrzeugs (23) in Querrichtung ist.

14. Kraftfahrzeug mit einer Airbaganordnung nach Anspruch 3 oder nach einem der Ansprüche 4 bis 11, wenn abhängig von Anspruch 3, wobei der Airbag (18) in Form eines Fahrer- oder Beifahrerairbags vorgesehen ist, der so angeordnet ist, dass er sich in einem Fahrzeuginnenraum des Fahrzeugs (23) in eine Position hinein entfaltet, in der eine Längsachse (15) des Airbags im Wesentlichen parallel zu einer Querachse des Fahrzeugs liegt.

## Revendications

1. Agencement d'airbag sur un véhicule à moteur (23) agencé pour assurer la protection d'un occupant du véhicule ou d'un piéton, l'agencement comprenant :
un airbag gonflable (18) et un gonfleur (20), le gonfleur (20) étant configuré pour générer un volume de gaz de gonflage lors de l'actionnement, et l'airbag (18) définissant un volume gonflable (19) disposé en communication fluidique avec le gonfleur (20) pour la réception dudit gaz de gonflage, l'airbag (18) étant agencé pour, lors du gonflage, se déployer en une configuration tubulaire comportant une paroi gonflable périphérique (27) qui définit au moins en partie ledit volume gonflable (18) et qui entoure une cavité non gonflable (28), la paroi gonflable (27) s'offrant à l'impact d'un occupant ou piéton depuis l'extérieur de la cavité (28),
**caractérisé en ce que** l'airbag (18) comprend en outre au moins un élément de retenue (8) s'étendant en travers de la cavité (28) et qui est configuré pour conférer un degré d'ovalité à la forme de la coupe transversale de l'airbag tubulaire (18) lors du gonflage.

2. Agencement d'airbag selon la revendication 1, dans lequel la paroi gonflable périphérique (27) comporte une surface intérieure (5) qui définit la cavité (28) et une surface extérieure (1) orientée dans la direction opposée s'offrant à l'impact avec l'occupant ou le piéton.

3. Agencement d'airbag selon la revendication 1 ou la revendication 2, dans lequel la configuration gonflée tubulaire de l'airbag (18) est allongée.

4. Agencement d'airbag selon la revendication 3, dans lequel le ou chaque dit élément de retenue (8) est agencé pour s'étendre sensiblement perpendiculairement à un axe longitudinal (15) de l'airbag tubulaire (18).

5. Agencement d'airbag selon la revendication 4, dans lequel l'airbag (28) comporte une pluralité desdits éléments de retenue (8) agencés de manière espacée entre eux le long de la longueur de l'airbag.

6. Agencement d'airbag selon la revendication 3, dans lequel le ou chaque dit élément de retenue (30) est agencé pour s'étendre sensiblement parallèlement à un axe longitudinal (15) de l'airbag tubulaire.

7. Agencement d'airbag selon l'une quelconque des revendications 1 à 6, dans lequel le ou au moins un dit élément de retenue (8) est gonflable, et est disposé en communication fluidique avec la paroi gonflable (27) de l'airbag.

8. Agencement d'airbag selon l'une quelconque des revendications 2 à 7, dans lequel le ou chaque élément de retenue (8) est relié à la surface intérieure (5) de la paroi gonflable (27).

9. Agencement d'airbag selon l'une quelconque des revendications précédentes, dans lequel la paroi gonflable (27) de l'airbag est configurée pour le gonflage essentiellement autour de toute son étendue périphérique de manière à avoir une épaisseur gonflée autour de toute la périphérie de la cavité (28).

10. Agencement d'airbag selon la revendication 9, dans lequel la paroi gonflable (27) définit un volume gonflable (19) qui est continu autour de toute la périphérie de la cavité (28) et qui est donc gonflable par des flux multidirectionnels (26) de gaz autour de la cavité (28) provenant du gonfleur (20).

11. Agencement d'airbag selon l'une quelconque des revendications 1 à 9, dans lequel la paroi périphérique définit un volume gonflable qui présente une interruption (48) en une position autour de la périphérie de la cavité, et qui est donc gonflable par un flux unidirectionnel de gaz (51) autour de la cavité provenant du gonfleur.

12. Véhicule à moteur comportant un agencement d'airbag selon la revendication 3, ou l'une quelconque des revendications 4 à 11 dans la mesure où elles dépendent de la revendication 3, dans lequel l'airbag (18) est fourni sous la forme d'un airbag pour piéton agencé pour le déploiement sur une zone de l'extérieur du véhicule (24, 25) en une position dans laquelle l'axe longitudinal (15) de l'airbag est sensiblement parallèle à un axe transversal du véhicule (23).

13. Véhicule à moteur selon la revendication 12, dans lequel l'airbag tubulaire (18) présente une longueur qui est sensiblement égale ou supérieure à la largeur transversale de ladite zone (24, 25) du véhicule (23).

14. Véhicule à moteur comportant un agencement d'airbag selon la revendication 3, ou l'une quelconque des revendications 4 à 11 dans la mesure où elles dépendent de la revendication 3, dans lequel l'airbag (18) est fourni sous la forme d'un airbag pour conducteur ou passager agencé pour le déploiement à l'intérieur d'un habitacle du véhicule (23) en une position dans laquelle un axe longitudinal (15) de l'airbag est sensiblement parallèle à un axe transversal du véhicule.
